# FASCICULE DE BREVET EUROPEEN

(11) **EP 2 019 477 B1**
(45) Date de publication et mention de la délivrance du brevet: **05.10.2011**
(21) Numéro de dépôt: 08160741.8
(22) Date de dépôt: 18.07.2008
(51) Int. Cl.: H02K 7/02

(54) **Volant d'inertie à lancement progressif.**
Schwungrad mit progressivem Anlauf
Flywheel with gradual starting

(30) Priorité: 27.07.2007 FR 0756774
(43) Date de publication de la demande: 28.01.2009
(73) Titulaire: GE Energy Products France SNC, 90000 Belfort (FR)
(72) Inventeur: Livernais, Daniel, 90200, VESCEMONT (FR)
(74) Mandataire: Delprat, Olivier

(56) Documents cités:
- EP-A- 1 382 817
- DE-A1- 3 442 080
- GB-A- 899 754
- JP-A- 4 099 995
- JP-A- 55 137 380

## Description

La présente invention concerne le domaine des dispositifs aptes à assurer une continuité de l'entraînement en rotation d'un arbre de transmission lors d'une coupure momentanée de l'alimentation électrique d'un moteur d'entraînement dudit arbre.

Une application particulièrement intéressante de l'invention concerne l'entraînement en rotation d'une pompe d'alimentation en fioul pour turbine à combustion.

Généralement, dans une installation industrielle, les auxiliaires d'une turbine à combustion sont alimentés électriquement par deux sources électriques différentes pour ne pas présenter de cause commune de défaillance.

Pour des raisons de fiabilité, ces deux sources n'alimentent pas simultanément les auxiliaires afin de ne pas transmettre d'éventuels défauts d'une source à l'autre source, par exemple une chute de tension due à une surcharge ou un court-circuit.

Le passage d'une source d'alimentation à l'autre s'effectue donc avec une coupure momentanée de la tension d'alimentation. Ce passage d'une source d'alimentation à l'autre est réalisé de façon automatique lors de la détection d'un défaut sur la source en service, ou encore par décision de l'opérateur, par exemple pour des raisons d'exploitation ou d'entretien.

De tels transferts effectués sans précautions particulières peuvent être particulièrement perturbants pour le fonctionnement des turbines à combustion. En effet, il est nécessaire d'assurer la continuité de l'alimentation en fioul haute pression pour ne pas risquer un déclenchement par perte de flammes et ne pas affecter la production d'énergie électrique. Dans certains pays, les conditions de raccordement au réseau électrique (« Grid Code » en langue anglaise) imposent que la turbine à combustion puisse être capable d'accepter une coupure de 1,5 secondes. Ceci est par exemple le cas aux Pays-Bas.

Pour satisfaire à ces exigences, l'utilisation d'un accumulateur pneumatique comportant un ballon dont le volume est séparé par une membrane élastique avec d'un coté le fioul haute pression d'alimentation et de l'autre un gaz neutre sous pression peut être envisagée. Cette solution fonctionne bien pour l'alimentation fioul basse pression. Toutefois, l'accumulateur interfère d'une manière inacceptable avec la régulation combustible de la turbine du coté haute pression à cause de l'allongement des constantes de temps qu'il provoque. La turbine est alors incapable de faire face à des variations de charge rapides par exemple lors de l'ouverture d'un disjoncteur ou sur un réseau iloté, l'adaptation du débit de fioul ne pouvant pas suivre fidèlement les variations de puissance.

Par ailleurs, le débit de remplissage du ballon lors du démarrage, ou lors de la reconstitution de l'accumulation après un transfert de sources ou un changement brutal du régime de charge de la turbine est prélevé sur la capacité de la pompe. Ceci affecte la faculté de la pompe à produire le débit nécessaire au bon fonctionnement de la turbine. Il s'ensuit une prolongation dans le temps du régime transitoire lors d'un transfert ou autres perturbations.

De façon similaire, il a déjà été envisagé le montage d'un accumulateur mécanique du type comportant un ensemble cylindre et piston qui délimite une première chambre à l'intérieur de laquelle se trouve le fioul haute pression d'alimentation de la turbine et une seconde chambre emplie d'un fluide de commande.

En fonctionnement, le piston est complètement repoussé par la pression du fioul. En fonctionnement normal, ce dispositif est neutre car le piston est en butée lorsque le stockage est terminé, et ne présente donc pas d'interférence avec la régulation combustible comme les accumulateurs pneumatiques. Lors d'une coupure momentanée de la tension d'alimentation, le fluide de commande présent dans l'accumulateur provoque le déplacement du piston, ce qui permet de restituer à la turbine une quantité de fioul préalablement stockée et ainsi palier la perte de débit de la pompe.

Cette solution a pour inconvénient majeur de ne pas être adaptée pour des installations industrielles pour lesquelles la pression du fioul varie en permanence pour s'adapter aux conditions d'exploitation. En effet, l'accumulateur mécanique ne restitue le fioul d'alimentation qu'à la pression à laquelle il a été stocké, ce qui ne correspond qu'à une condition particulière d'exploitation. Dès lors, quand intervient une coupure momentanée d'électricité, il se produit une variation de charge d'autant plus importante que les conditions d'exploitation au moment de l'interruption sont éloignées des conditions de fonctionnement lors du stockage.

Un dispositif d'entraînement selon le préambule de la revendication 1 est connu de DE 3442080.

La présente invention a pour but de remédier aux inconvénients précités liés au stockage du fioul.

Plus particulièrement, l'invention a pour but de prévoir un dispositif qui permet un entraînement en rotation d'une pompe d'alimentation afin d'assurer la continuité de l'alimentation en fluide haute pression d'une turbine à combustion, lors d'une interruption momentanée de courant électrique, et ce, de manière particulièrement rapide, efficace, économique et dans un encombrement réduit.

La présente invention a également pour but de prévoir un dispositif n'augmentant pas le temps nécessaire au démarrage de l'ensemble moteur-pompe. Cette faculté est en effet nécessaire pour garantir une reprise en secours rapide et efficace par la pompe en réserve lors de la défaillance de l'une des pompes en service.

La présente invention a encore pour but de prévoir un dispositif n'interférant pas hydrauliquement avec les fluides destinés à l'alimentation de la turbine pour ne pas rallonger les constantes de temps des boucles de régulation.

Ces buts sont atteints avec le dispositif de la revendication 1, l'utilisation de ce dispositif selon la revendication 9 et le procédé de la revendication 11.

Dans un mode de réalisation, le dispositif d'entraînement en rotation d'un moteur comprend un volant d'inertie, une roue libre apte à assurer un embrayage unidirectionnel automatique sur inversion de couple entre le volant d'inertie et un arbre du moteur, et un moyen d'entraînement en rotation du volant d'inertie. Le moyen d'entraînement en rotation du volant d'inertie est adapté pour ne pas affecter le temps de démarrage du moteur. Le dispositif d'entraînement est monté à une extrémité axiale de l'arbre du moteur opposée à celle destinée à l'accouplement avec un organe mécanique entraîné par le moteur.

Avec un tel dispositif, il devient dès lors possible d'obtenir l'entraînement en rotation de l'arbre de transmission du moteur de manière particulièrement simple, efficace et économique, lors de l'arrêt momentané dudit moteur en lui substituant l'énergie cinétique du volant d'inertie.

En effet, lors d'une coupure momentanée de l'alimentation électrique du moteur, la roue libre permet de coupler temporairement le volant d'inertie et l'arbre du moteur, et ce de manière automatique sans pilotage extérieur, de façon à obtenir une continuité dans l'entraînement en rotation. Ensuite, lorsque le moteur d'entraînement est de nouveau alimenté électriquement, le volant d'inertie est désaccouplé de l'arbre de transmission, ce qui ne pénalise pas le temps de redémarrage du moteur.

L'utilisation d'une roue libre montée entre le volant d'inertie et l'arbre de transmission permet ainsi d'obtenir, lors du passage d'une source d'alimentation à une autre, un état transitoire de fonctionnement particulièrement court, ce qui assure la continuité de l'alimentation en fluide de la turbine à combustion.

En outre, avec le moyen d'entraînement en rotation du volant d'inertie, il n'est pas nécessaire de surdimensionner le moteur pour permettre un entraînement en rotation de l'arbre et du volant d'inertie.

En effet, le moyen d'entraînement est adapté pour ne pas affecter le temps de démarrage du moteur. A cet égard, le moyen d'entraînement comporte un coupleur hydraulique, par exemple à huile, adapté pour pouvoir garder le volant d'inertie à l'arrêt lors du démarrage du moteur et transmettre un couple au volant d'inertie lorsque le moteur a atteint sa vitesse nominale de rotation en fonction de l'alimentation ou non en fluide du coupleur.

L'inertie du volant est choisie pour ne produire qu'une faible variation de vitesse de l'arbre de transmission, par exemple de 10 à 15% lors du temps nécessaire au transfert de source. La faible variation de pression du fluide haute pression ne conduira pas à une variation de charge sensible, étant donné que cette variation est suffisamment faible et lente pour être pratiquement compensée par la réaction de la régulation combustible turbine.

Avantageusement, le moyen d'entraînement en rotation est apte à transmettre un couple ajustable d'entraînement au volant d'inertie à partir d'un couple du moteur, assurant une mise en rotation progressive de celui-ci dans le but de limiter la surcharge du moteur lors de la mise en rotation du volant d'inertie. Ainsi, on étale dans le temps l'accumulation d'énergie cinétique au sein du volant en vue d'une restitution ultérieure lors d'une coupure électrique. Le couple est fourni à partir de l'arbre de transmission du moteur et est ajusté pour ne pas surcharger le moteur de manière excessive.

Le moyen d'entraînement ou de mise en vitesse du volant forme un moyen de couplage de l'arbre de transmission avec le volant d'inertie apte à transmettre un couple d'entraînement limité et ajustable pour assurer une mise en vitesse progressive.

De préférence, un couple d'inertie du volant d'inertie se substitue au couple nominal du moteur en moins de cinquante millisecondes lors d'un blocage de la roue libre.

Dans un mode de réalisation, le dispositif comprend en outre un arbre primaire creux pour le montage du dispositif sur l'arbre de transmission. L'arbre primaire creux forme ainsi un manchon d'adaptation du dispositif sur ledit arbre.

Avantageusement, le dispositif comprend encore un arbre secondaire entourant radialement l'arbre primaire creux et sur lequel est monté le volant d'inertie. La roue libre peut être montée radialement entre l'arbre primaire creux et l'arbre secondaire.

Préférentiellement, le volant d'inertie comprend un moyeu, une jante, et un voile de raccordement reliant le moyeu à la jante. Avantageusement, le voile comprend des ailettes aptes à générer un flux d'air lors de la rotation du volant d'inertie pouvant assurer la ventilation du moteur lorsque le dispositif se monte à la place du ventilateur dudit moteur. La jante du volant d'inertie peut canaliser le flux d'air généré en direction du moteur en vue de sa ventilation.

Le dispositif d'entraînement est monté en porte à faux sur l'arbre du moteur à la place du ventilateur associé généralement au moteur, sans palier spécifique, et permet via le voile de raccordement du volant d'inertie de créer une ventilation qui est canalisée par la jante dudit volant. Cet arrangement ne nécessite pas plus de place qu'un moteur standart et la modernisation ou amélioration des installations existantes est rendue possible.

Dans un autre mode de réalisation, une pompe d'alimentation en fluide comprend un moteur, un arbre de transmission et un dispositif d'entraînement en rotation dudit arbre tel que défini précédemment.

Dans un autre mode de réalisation, une turbine à combustion comprenant une pluralités de pompes d'alimentation en fluide pourvues chacune d'un moteur, d'un arbre de transmission et d'un dispositif d'entraînement en rotation dudit arbre tel que défini précédemment.

Dans un mode de réalisation, un procédé d'entraînement en rotation d'un moteur, comprend les étapes selon lesquelles on assure un embrayage unidirectionnel automatique sur inversion de couple entre un volant d'inertie et le moteur, on entraîne progressivement le volant d'inertie lorsque la vitesse de rotation du moteur à entraîner est atteinte, et on entraîne en rotation le moteur par l'intermédiaire du volant d'inertie lors d'une défaillance dudit moteur.

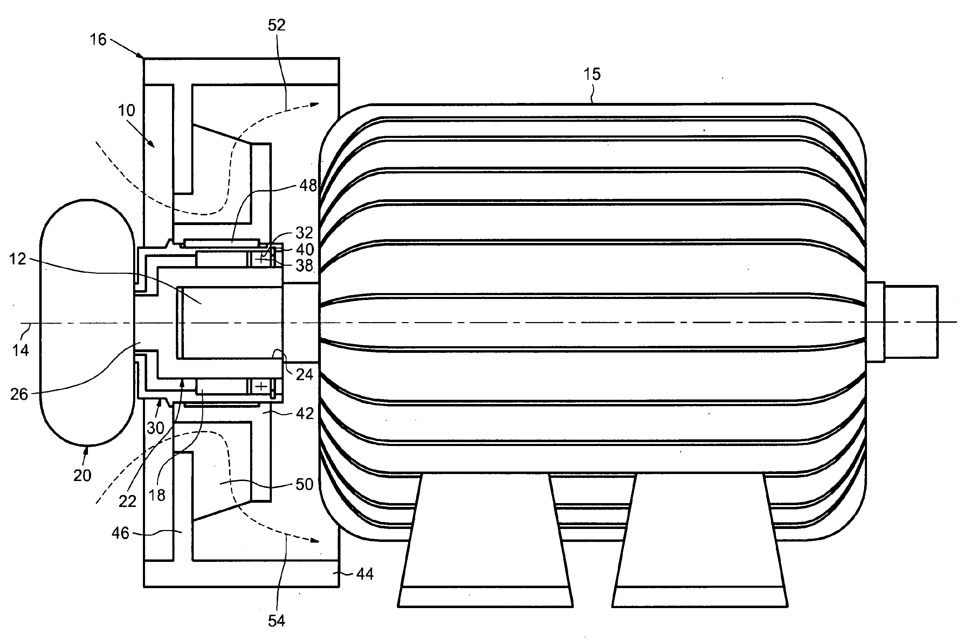

L'invention sera mieux comprise à l'étude d'un mode de réalisation particulier pris à titre d'exemple nullement limitatif et illustré par le dessin annexé représentant schématiquement en coupe un dispositif d'entraînement selon la présente invention.

Sur la figure, on a représenté l'architecture générale d'un dispositif selon l'invention, désigné par la référence numérique générale 10, et prévu pour l'entraînement en rotation d'un arbre 12 de transmission, d'axe 14 supposé horizontal, d'un moteur 15. L'arbre 12 est en saillie axiale de part et d'autre du corps du moteur 15.

Plus précisément, le dispositif 10 est prévu pour permettre l'entraînement de l'arbre 12 de transmission, lors d'une défaillance momentanée dans l'alimentation électrique du moteur 15. Le moteur 15 est destiné à l'entraînement d'une pompe d'alimentation en fluide (non représentée). L'accouplement de cette pompe s'effectue à une extrémité axiale de l'arbre 12 opposée à celle sur laquelle est monté le dispositif 10, en considérant le moteur 15.

Le dispositif 10 est particulièrement adapté pour l'entraînement en rotation d'une pompe à alimentation en fioul d'une turbine à combustion destinée à la production d'énergie électrique, ou à l'entraînement mécanique de compresseurs.

Toutefois, on conçoit aisément qu'il pourrait être également envisageable d'utiliser le dispositif 10 pour l'entraînement en rotation d'autres éléments mécaniques.

Le dispositif 10 comprend principalement un volant d'inertie 16, une roue libre 18 disposée entre ledit volant et l'arbre 12, et un moyen d'entraînement 20 en rotation du volant d'inertie 16.

Comme cela sera décrit plus en détail par la suite, la roue libre 18 permet d'assurer un embrayage unidirectionnel entre le volant d'inertie 16 et l'arbre de transmission 12.

Pour permettre son montage sur l'arbre de transmission 12, le dispositif 10 comprend un arbre primaire 22 creux coaxial à l'axe 14. Cet arbre primaire 22 permet d'assurer la liaison entre l'arbre de transmission 12 et le moyen d'entraînement 20. A cet effet, l'arbre primaire 22 s'adapte d'un côté au diamètre de l'arbre de transmission 12 par son alésage 24 intérieur, et de l'autre côté au moyen d'entraînement 20 par une portion 26 de diamètre réduit. L'arbre primaire 22 creux peut être couplé à l'arbre de transmission 12, par tout moyen approprié, par exemple une clavette.

Le dispositif 10 comprend également un arbre secondaire 30 pour le montage du volant d'inertie 16. L'arbre secondaire 30 se présente sous la forme d'un arbre creux coaxial à l'axe 14 entourant radialement l'arbre primaire 22. L'arbre secondaire 30 est relié d'un côté au moyen d'entraînement 20.

Pour permettre une rotation unidirectionnelle de l'arbre secondaire 30 et de l'arbre primaire 22, le dispositif 10 comprend un roulement 38, coaxial avec l'axe 14, et la roue libre 18 disposés radialement entre l'arbre primaire 22 et l'arbre secondaire 30. Le roulement 38, ici représenté schématiquement, est du type conventionnel et monté axialement entre la roue libre 18 et le moteur 15.

La roue libre 18 est montée axialement au voisinage du roulement 38. La roue libre 18 est représentée de manière schématique sur la figure. Elle comprend une pluralité d'éléments de coincement ou cames disposées entre les arbres 22 et 30, et une cage annulaire pour le maintien des cames. Les cames sont conformées pour avoir tendance à se coucher dans un sens du couple transmis et à s'arc-bouter entre les arbres 22 et 30 dans l'autre sens.

En d'autres termes, les cames sont configurées pour permettre, lors de la rotation de la roue libre 18, un fonctionnement dans un mode débrayé dans lequel aucun couple n'est transmis entre le volant d'inertie 16 et l'arbre de transmission 12. Dans ces conditions de fonctionnement, les arbres 22 et 30 forment des chemins de roulement pour les cames de la roue libre 18.

Un anneau de retenue axiale 40 de type circlips est monté dans l'alésage 32 de l'arbre creux 30 de manière à assurer la retenue axiale de la roue libre 18 et du roulement 38 à l'intérieur de l'espace radial ménagé entre l'arbre primaire 22 et l'arbre secondaire 30.

Le volant d'inertie 16, coaxial à l'axe 14, comporte quant à lui un moyeu 42, une jante 44 périphérique annulaire entourant partiellement le moteur 15, et un voile de raccordement 46 reliant le moyeu à la jante. Le volant d'inertie 16 est situé axialement entre le moyen d'entraînement 20 et le moteur 15. Le moyeu 42 est couplé sur la surface extérieure de l'arbre secondaire 30, par tout moyen approprié, ici une clavette 48. Le moyeu 42 présente une forme annulaire centrée sur l'axe 14. Le voile de raccordement 46 entre le moyeu 42 et la jante 44 permet d'assurer la transmission d'un couple d'entraînement en rotation du volant dans un sens, et d'un couple d'inertie transmis par la jante 44 dans un sens opposé, ladite jante fournissant la majorité de l'inertie du volant 16.

Le voile de raccordement 46 comprend des ailettes 50 représentées schématiquement ou est constitué par ces ailettes, pour créer un flux d'air se dirigeant en direction du moteur 15 et assurer sa ventilation. Le volant d'inertie 16, et plus particulièrement le voile de raccordement 46 forme ainsi moyen de génération d'un flux d'air illustré par les flèches 52 et 54 qui permet au volant d'inertie 16 de se substituer au ventilateur d'origine du moteur 15, le dispositif 10 s'installant à sa place. La jante 44 permet de canaliser le flux d'air créé en direction du moteur 15.

Le moyen d'entraînement 20 du volant d'inertie est monté en porte à faux sur les arbres primaire et secondaire 22, 30. Le moyen d'entraînement 20 est adapté pour transmettre un couple d'entraînement limité au volant d'inertie 16 afin d'assurer sa mise en vitesse progressive, à partir d'un couple moteur prélevé sur l'arbre de transmission 12. Cette transmission de couple s'effectue par l'intermédiaire de l'arbre primaire 22 puis de l'arbre secondaire 30 qui sont reliés au moyen d'entraînement 20. Ledit moyen d'entraînement 20 (représenté ici schématiquement) est un coupleur à huile.

Le mode de fonctionnement du dispositif 10 est le suivant.

Lors d'un démarrage du moteur 15 d'entraînement, l'arbre de transmission 12 et l'arbre primaire 22 sont entraînés en rotation. L'arbre secondaire 30 reste quant à lui à l'arrêt grâce à la présence de la roue libre 18 fonctionnant en mode débrayé. Une fois que l'arbre de transmission 12 a atteint sa vitesse nominale de rotation, le moyen d'entraînement 20 transmet alors un couple limité prélevé sur le moteur 15 à l'arbre secondaire 30 de manière à permettre un entraînement progressif en rotation du volant d'inertie 16 jusqu'à atteindre sensiblement la vitesse de rotation dudit moteur.

Ainsi, le temps de démarrage du moteur 15 n'est pas affecté par la mise en rotation du volant d'inertie 16 puisque cette mise en rotation s'effectue après le démarrage du moteur. Le lancement progressif du volant d'inertie 16 ne nécessite qu'un couple limité et faible devant la capacité du moteur, ce qui évite son surdimensionnement ou sa surcharge momentanée.

En d'autres termes, le moyen d'entraînement 20 est inactif tant que la vitesse nominale de rotation du moteur 15 n'est pas atteinte, et actif ensuite de manière à prélever de façon ajustable et progressive un couple à transmettre au volant d'inertie.

Lors d'une coupure momentanée de l'alimentation électrique du moteur 15, le couple électrique disparaît et le couple résistant de la pompe tend à faire ralentir l'arbre de transmission 12. Les cames ont alors tendance à basculer automatiquement dans le sens favorisant leur blocage entre les chemins des arbres 22, 30, ce qui provoque leur blocage par arc-boutement. La roue libre 18 fonctionne alors en prise de couple ou embrayée et transmet un couple d'entraînement entre le volant d'inertie 16 et l'arbre de transmission 12. On obtient ainsi un entraînement en rotation dudit arbre 12 par restitution de l'énergie cinétique accumulée par le volant d'inertie 16 en remplacement de l'énergie électrique disparue. Bien entendu, on conçoit aisément que l'inertie du volant 16 est notamment déterminée en fonction de la puissance de l'organe à entraîner, de la réduction de vitesse acceptable par celui-ci, et du temps de coupure électrique lors d'un transfert d'une source d'alimentation vers une autre source d'alimentation électrique.

Une fois le basculement d'une source d'alimentation à l'autre effectué, le moteur 15 est de nouveau alimenté en courant, ce qui provoque une réaccélération de l'arbre de transmission 12 et un déblocage des cames de la roue libre 18. La roue libre 18 fonctionne alors de nouveau en mode débrayé. De façon similaire au lancement, le moyen d'entraînement 20 va remettre en vitesse ou rotation le volant d'inertie 16 pour pouvoir palier à nouveau une coupure électrique lorsque la vitesse nominale de rotation du moteur sera de nouveau atteinte.

Grâce à l'invention, on dispose ainsi d'un dispositif d'entraînement pouvant palier de manière efficace, économique, et dans un encombrement axial et radial réduit, une défaillance momentanée d'une source d'alimentation électrique en vue d'assurer une période transitoire d'entraînement en rotation.

Bien que dans le mode de réalisation illustré l'arbre secondaire 30 et le volant d'inertie 16 sont deux pièces distinctes, on conçoit aisément qu'il est également possible sans sortir du cadre de l'invention de prévoir un dispositif dans lequel le volant d'inertie 16 et l'arbre 30 soient réalisés de façon monobloc.

## Revendications

1. Dispositif d'entraînement en rotation d'un moteur (15) comprenant un volant d'inertie (16) et une roue libre (18) apte à assurer un embrayage unidirectionnel automatique sur inversion, de couple entre le volant d'inertie et un arbre (12) du moteur (15), le dispositif d'entraînement étant destiné à être monté à une extrémité axiale de l'arbre (12) du moteur opposée à celle prévue pour l'accouplement avec un organe mécanique entraîné par le moteur (15) **caractérisé en ce qu'**il comprend un moyen d'entraînement (20) en rotation du volant d'inertie comportant un coupleur hydraulique adapté pour être inactif lors du démarrage du moteur et actif une fois que la vitesse de rotation du moteur est atteinte en fonction de l'alimentation ou non en fluide du coupleur.

2. Dispositif selon la revendication 1, dans lequel le moyen d'entraînement (20) en rotation est apte à assurer une mise en rotation progressive du volant d'inertie.

3. Dispositif selon la revendication 2, dans lequel le moyen d'entraînement (20) en rotation est apte à transmettre un couple ajustable à partir d'un couple de l'arbre (12) afin de limiter la surcharge du moteur (15) lors de la mise en rotation du volant d'inertie (16).

4. Dispositif selon l'une quelconque des revendications précédentes, comprenant en outre un arbre primaire (22) creux pour le montage du dispositif sur l'arbre (12).

5. Dispositif selon la revendication 4, comprenant en outre un arbre secondaire (30) entourant radialement l'arbre primaire (22) creux et sur lequel est monté le volant d'inertie (16).

6. Dispositif selon l'une quelconque des revendications précédentes, dans lequel le volant d'inertie (16) comprend un moyeu (42), une jante (44) et un voile de raccordement (46) reliant le moyeu à la jante.

7. Dispositif selon la revendication 6, dans lequel le voile de raccordement (46) comprend des ailettes (50) aptes à générer un flux d'air lors de la rotation du volant d'inertie de manière à permettre au volant d'inertie (16) de se substituer à un ventilateur du moteur (15).

8. Dispositif selon la revendication 7, dans lequel la jante du volant d'inertie (16) canalise le flux d'air généré en direction du moteur en vue de sa ventilation.

9. Utilisation d'un dispositif selon l'une quelconque des revendications précédentes dans une turbine à combustion pour l'entraînement en rotation d'une pompe d'alimentation en fioul.

10. Turbine à combustion comprenant une pluralités de pompes d'alimentation en fluide comprenant chacune un moteur, un arbre de transmission et un dispositif d'entraînement en rotation dudit arbre selon l'une quelconque des revendications 1 à 8.

11. Procédé d'entraînement en rotation d'un moteur, **caractérisé en ce qu'**on assure un embrayage unidirectionnel automatique sur inversion de couple entre un volant d'inertie (16) et le moteur (15), on entraîne progressivement le volant d'inertie (16) lorsque la vitesse de rotation du moteur (15) à entraîner est atteinte, et on entraîne en rotation le moteur (15) par l'intermédiaire du volant d'inertie (16) lors d'une défaillance dudit moteur.

12. Procédé selon la revendication 11, dans lequel la substitution du couple du moteur (15) par un couple d'inertie du volant d'inertie (16) s'effectue en moins de cinquante millisecondes.

## Claims

1. Device for driving the rotation of a motor (15) comprising a flywheel (16) and a freewheel (18) capable of providing an automatic one-way clutch function upon the reversal of torque between the flywheel and a shaft (12) of the motor (15), the drive device being intended to be mounted at one axial end of the shaft (12) of the motor that is the opposite to the end intended to be coupled to a mechanical member driven by the motor (15), **characterized in that** it comprises a drive means (20) for driving the rotation of the flywheel comprising a hydraulic coupler designed to be inactive on motor start-up and active once the rotational speed of the motor has been reached according to whether or not the coupler is supplied with fluid.

2. Device according to Claim 1, in which the rotational-drive means (20) is able to cause the flywheel to start to rotate gradually.

3. Device according to Claim 2, in which the rotational drive means (20) is able to transmit an adjustable torque dependent on a torque of the shaft (12), so as to limit the overload of the motor (15) as the flywheel (16) begins to rotate.

4. Device according to any one of the preceding claims, further comprising a hollow primary shaft (22) for mounting the device on the shaft (12).

5. Device according to Claim 4, further comprising a secondary shaft (30) radially surrounding the hollow primary shaft (22) and on which the flywheel (16) is mounted.

6. Device according to any one of the preceding claims, in which the flywheel (16) comprises a hub (42), a rim (44) and a connecting wheel disk (46) connecting the hub to the rim.

7. Device according to Claim 6, in which the connecting wheel disk (46) comprises fins (50) able to generate an airflow as the flywheel rotates so as to allow the flywheel (16) to take over the role of a fan for cooling the motor (15).

8. Device according to Claim 7, in which the rim of the flywheel (16) channels the generated airflow towards the motor in order to ventilate it.

9. Use of a device according to any one of the preceding claims in a combustion turbine for driving the rotation of a fuel oil feed pump.

10. Combustion turbine comprising a plurality of fluid feed pumps each comprising a motor, a transmission shaft and a device for driving the rotation of the said shaft according to any one of Claims 1 to 8.

11. Method for driving the rotation of a motor, **characterized in that** an automatic one-way clutch function is provided on reversal of torque between a flywheel (16) and the motor (15), the flywheel (16) is driven gradually when the rotational speed of the motor (15) to be driven is achieved, and the motor (15) is rotationally driven by the flywheel (16) in the event of a failure of the said motor.

12. Method according to Claim 11, in which the inertia torque from the flywheel (16) takes over from the torque provided by the motor (15) in under fifty milliseconds.

## Patentansprüche

1. Vorrichtung für den Drehantrieb eines Motors (15), mit einem Schwungrad (16) und mit einem Freilauf (18), der eine automatische Einwegkupplung bei einer Drehmomentumkehr zwischen dem Schwungrad und einer Welle (12) des Motors (15) gewährleisten kann, wobei die Antriebsvorrichtung dazu bestimmt ist, an einem axialen Ende der Welle (12) des Motors entgegengesetzt zu demjenigen montiert zu werden, das für die Kopplung mit einem vom Motor (15) angetriebenen mechanischen Organ vorgesehen ist, **dadurch gekennzeichnet, dass** sie eine Drehantriebseinrichtung (20) des Schwungrads enthält, die eine hydraulische Kupplung aufweist, welche geeignet ist, um beim Start des Motors inaktiv, und wenn die Drehgeschwindigkeit des Motors erreicht ist, aktiv zu sein, abhängig davon, ob die Kupplung mit einem Fluid gespeist wird oder nicht.

2. Vorrichtung nach Anspruch 1, bei der die Drehantriebseinrichtung (20) ein progressives Indrehungversetzen des Schwungrads gewährleisten kann.

3. Vorrichtung nach Anspruch 2, bei der die Drehantriebseinrichtung (20) ein ausgehend von einem Drehmoment der Welle (12) einstellbares Drehmoment übertragen kann, um die Überlastung des Motors (15) beim Indrehungversetzen des Schwungrads (16) zu begrenzen.

4. Vorrichtung nach einem der vorhergehenden Ansprüche, die außerdem eine hohle Primärwelle (22) für die Montage der Vorrichtung auf die Welle (12) enthält.

5. Vorrichtung nach Anspruch 4, die außerdem eine Sekundärwelle (30) enthält, die die hohle Primärwelle (22) radial umgibt, und auf die das Schwungrad (16) montiert wird.

6. Vorrichtung nach einem der vorhergehenden Ansprüche, bei der das Schwungrad (16) eine Nabe (42), eine Felge (44) und eine Anschluss-Radschüssel (46) enthält, die die Nabe mit der Felge verbindet.

7. Vorrichtung nach Anspruch 6, bei der die Anschluss-Radschüssel (46) Rippen (50) enthält, die bei der Drehung des Schwungrads einen Luftstrom erzeugen können, um es dem Schwungrad (16) zu ermöglichen, einen Lüfter des Motors (15) zu ersetzen.

8. Vorrichtung nach Anspruch 7, bei der die Felge des Schwungrads (16) den erzeugten Luftstrom in Richtung des Motors für seine Belüftung kanalisiert.

9. Verwendung einer Vorrichtung nach einem der vorhergehenden Ansprüche in einer Verbrennungsturbine für den Drehantrieb einer Ölzufuhrpumpe.

10. Verbrennungsturbine, die eine Vielzahl von Fluidzufuhrpumpen enthält, die je einen Motor, eine Antriebswelle und eine Drehantriebsvorrichtung der Welle nach einem der Ansprüche 1 bis 8 enthalten.

11. Verfahren zum Drehantrieb eines Motors, **dadurch gekennzeichnet, dass** eine automatische Einwegkupplung bei einer Drehmomentumkehr zwischen einem Schwungrad (16) und dem Motor (15) gewährleistet wird, das Schwungrad (16) progressiv angetrieben wird, wenn die Drehgeschwindigkeit des anzutreibenden Motors (15) erreicht ist, und der Motor (15) bei einem Ausfall des Motors mit Hilfe des Schwungrads (16) in Drehung versetzt wird.

12. Verfahren nach Anspruch 11, bei dem der Ersatz des Drehmoments des Motors (15) durch ein Trägheitsmoment des Schwungrads (16) in weniger als fünfzig Millisekunden erfolgt.
